# EUROPEAN PATENT APPLICATION

(11) **EP 0 840 524 A1**
(43) Date of publication of application: **06.05.1998**
(21) Application number: 97308641.6
(22) Date of filing: 29.10.1997
(51) Int. Cl.: H04N 9/31

(54) **Image projecting apparatus and its method of adjustment**

(30) Priority: 31.10.1996 JP 290234/96
(71) Applicant: SONY CORPORATION, Tokyo (JP)
(72) Inventor: Ono, Shigeki, Shinagawa-ku, Tokyo (JP)
(74) Representative: Ayers, Martyn Lewis Stanley

(57) **Abstract**

It is an object of the present invention to provide an image projecting apparatus that allows white-balance (GAMMA) adjustment to be carried out with a high degree of efficiency without the need for the service man to carry about a signal generator for generating a test pattern for use in the white-balance (GAMMA) adjustment with him and an adjustment method for carrying out the white-balance (GAMMA) adjustment.

An adjustment screen displayed by the image projecting apparatus includes a white-balance (GAMMA) adjustment item, adjustment data expressed by the absolute value of an adjustment number thereof, an abbreviated display (such as R) of an adjusted panel in relation to the G liquid-crystal display panel serving as a reference and the ten-step signal. The service man carries out white-balance (GAMMA) adjustment on the R and B liquid-crystal display panels while verifying the screens by using a driving colorimeter or by visual observation in relation to the G liquid-crystal display panel which has been adjusted as a reference on the basis of the ten-step signal. As a result, it is possible to adjust the image projecting apparatus with a high degree of precision and a high degree of efficiency in a short period of time.

## Description

In general, the present invention relates to an image projecting apparatus such as a rear-type liquid-crystal projector and a method of adjustment thereof. In particular, the present invention relates to an image projecting apparatus wherein a test pattern for white-balance (GAMMA) adjustment is displayed on a screen, allowing the efficiency of the assembly adjustment work and test adjustment work of the image projecting apparatus to be increased, and relates a method of adjustment thereof.

In the ordinary image projecting apparatus such as a rear-type liquid-crystal projector, light passing through a liquid-crystal display panel is projected on a screen for displaying an image. To put it in detail, an illumination light is generated by a light source such as a metal halide lamp. The illumination light is passed through a spectroscopic means to produce red (R), green (G) and blue (B) lights. The R, G and B illumination lights then pass through their respective liquid-crystal display panels which are driven by using red, green and blue colour signals.

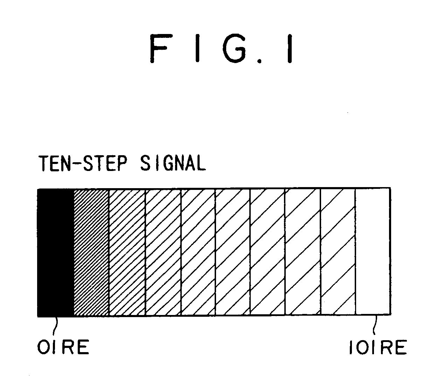

After the R, G and B illumination lights passing through the respective liquid-crystal display panels are synthesized by using a synthesizing means, they are projected on a screen from behind by a projecting lens, forming a colour displayed image. In such a rear-type liquid-crystal projector, white-balance (GAMMA) adjustment for adjusting the hues of the R, G and B liquid-crystal display panels is carried out by using typically a ten-step signal like one shown in Fig. 1. The ten-step signal is a stair-like-step signal having a gradually varying density starting from 0 IRE. The white-balance adjustment of a rear-type liquid-crystal projector is carried out as follows.

First of all, in the NTSC mode, the main body of the rear-type liquid-crystal projector is connected to an NTSC-signal generator to receive a test signal. With the picture kept at 90%, the sharpness, the brightness, the hue and the concentration of the hue (colour) are set at standard levels. Then, with the colour temperature set at "H" and a 30-IRE flat field signal supplied to the input terminal, a service mode is set.

Then, with an 80-IRE flat field signal supplied to the input terminal, the R and B liquid-crystal display panels are adjusted to values in a specification range by using the G liquid-crystal display panel as a reference. To put it in detail, in relation to the G liquid-crystal display panel which has been adjusted to serve as a reference, while the screens are being verified by using a driving colorimeter or by visual observation, the R and B liquid-crystal display panels are adjusted so as to produce no colour seams by varying the cut-off points and the video amplitudes of R and B drivers.

These operations are repeated and the ten-step signal shown in Fig. 1 of the accompanying drawings is supplied again to verify that there is no observed colour seam on the screen over the range 0 to 10 IREs. Finally, the data is stored in a memory unit employed in the main body of the rear-type liquid-crystal projector.

Then, a transition to an HD mode is made to repeat the same adjustment in order to adjust the white balance in the HD mode. Likewise, the data is saved in the memory unit.

Such white-balance (GAMMA) adjustment must be carried out upon replacement of a liquid-crystal display panel or a driving circuit or after adjusting a relevant item of adjustment. It is a matter of fact, however, that a signal generator for carrying out the white-balance (GAMMA) adjustment on such a rear-type liquid-crystal projector is not available at a site where service work is required. For this reason, the service man has to carry about a signal generator for generating a ten-step signal with him each time the service man does service work, giving rise to a problem that, not only is it cumbersome for the service man to carry about a signal generator, but it also takes an excessively long time to accomplish the adjustment, entailing a low efficiency of adjustment.

Addressing the problem described above, it is thus an object of the present invention to provide an image projecting apparatus that allows white-balance (GAMMA) adjustment to be carried out with a high degree of efficiency without the need for the service man to carry about a signal generator for generating a signal pattern for use in the white-balance (GAMMA) adjustment with him and an adjustment method of carrying out the white-balance (GAMMA) adjustment.

The method provided by the present invention for adjusting an image projecting apparatus wherein R, G and B lights passing through their respective liquid-crystal display panels are projected on a display screen to form an image comprises:
an inputting step of inputting a control instruction and selecting a service mode for carrying out operations such as adjusting the white balance (GAMMA);
a processing step of accepting and processing an input control instruction and a selected service mode;
a signal generating step of generating a test pattern to be used in the service mode; and
a displaying/outputting step of displaying the test pattern generated at the signal generating step by superposition of the test pattern on an image displayed on the display screen.

The method is characterized in that the adjustment of the liquid-crystal display panels is based on the test pattern appearing on the display screen.

In addition, the image projecting apparatus provided by the present invention for projecting lights passing through the R, G and B liquid-crystal display panels on a display screen in order to form an image thereon comprises:
an inputting means for inputting a control instruction and selecting a service mode for carrying out operations such as adjusting the white balance (GAMMA);
a processing means for accepting and processing an input instruction and a selected service mode;
a signal generating means for generating a test pattern such as a ten-step signal to be used in the service mode; and
a displaying/outputting means for displaying the test pattern generated by the signal generating means by superposition of the test pattern on an image displayed on the display screen.

It should be noted that the image displayed on the display screen does not necessarily have to be an image currently being produced.

As described above, according to the image projecting apparatus and the image projecting method provided by the present invention, a test pattern required in the white-balance (GAMMA) adjustment of the image projecting apparatus is displayed on a display screen of the image projecting apparatus being adjusted. Thus, the service man is capable of adjusting the image projecting apparatus by directly observing a display screen thereof without the need to prepare a signal generator for generating a signal required in the white-balance (GAMMA) adjustment. As a result, it is possible to carry out the assembly adjustment and the service adjustment of the image projecting apparatus with a high degree of precision and a high degree of efficiency in a short period of time.

The invention will be further described by way of non-limitative example with reference to the accompanying drawings, in which:-
Fig. 1 is a diagram showing a typical display of a ten-step signal used in the white-balance (GAMMA) adjustment of the ordinary liquid-crystal projector;
Fig. 2 is a block circuit diagram showing the configuration of main components employed in an image projecting apparatus provided by the present invention;
Figs. 3A and 3B are explanatory diagrams used for explaining generation of a test pattern in the image projecting apparatus provided by the present invention with, to be more specific, Fig. 3A being a circuit diagram showing a signal generating means and Fig. 3B being a diagram showing a table of typical signals output by a screen displaying IC; and
Figs. 4A and 4B are explanatory diagrams showing typical display screens used for explaining an adjustment method provided by the present invention with, to be more specific, Fig. 4A being a diagram showing how a ten-step signal is synthesized with a video signal and Fig. 4B being a diagram showing how an inverted ten-step signal is synthesized with a video signal.

The present embodiment will become more apparent from a careful study of the following detailed description of a preferred embodiment with reference to the accompanying diagrams.

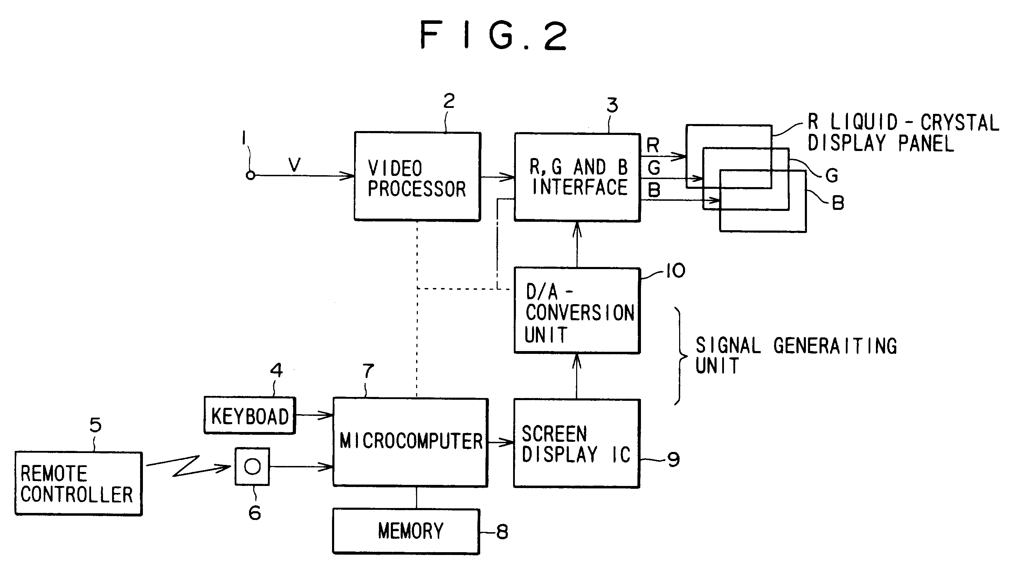

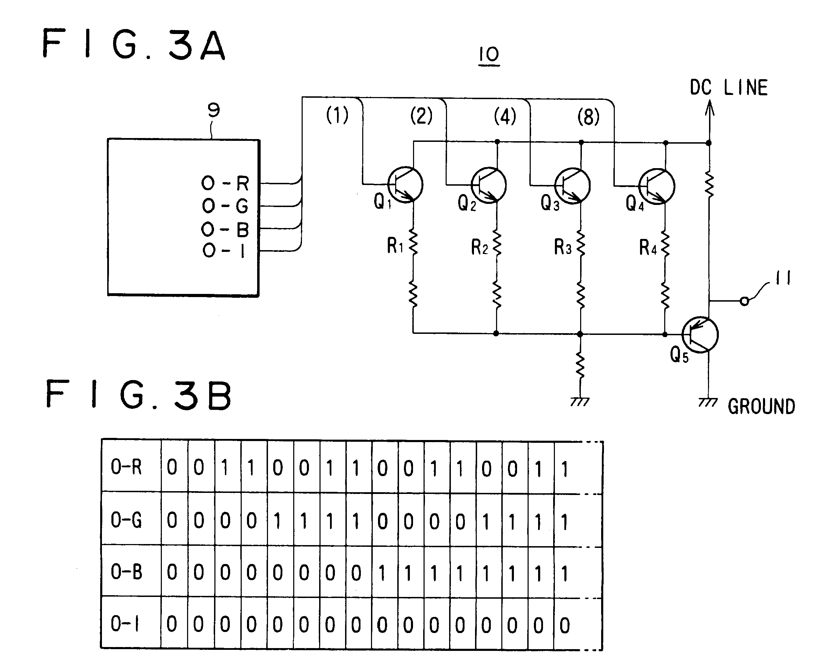

First of all, the configuration of the image projecting apparatus provided by the present embodiment is explained by referring to Figs. 2 and 3. Fig. 2 is a block circuit diagram showing the configuration of main components employed in an image projecting apparatus provided by the present invention and Figs. 3A and 3B are explanatory diagrams used for explaining generation of a test pattern in the image projecting apparatus provided by the present invention. To be more specific, Fig. 3A is a circuit diagram showing a signal generating means and Fig. 3B is a diagram showing a table of typical signals output by a screen displaying IC.

As shown in Fig. 2, the image projecting apparatus provided by the present invention comprises components including an input terminal 1 for receiving a video signal selected by a U/V tuner or a BS tuner, a video processor 2 for carrying processing such as amplification on the input video signal, an R, G and B interface 3, R, G and B liquid-crystal display panels, a keyboard 4 for operating the image projecting apparatus, a remote controller 5 for carrying out remote-control operations of the image projecting apparatus, a light receiving unit 6, a microcomputer 7 for controlling the image projecting apparatus and a memory unit 8 for storing information required in the control of the image projecting apparatus.

In addition, as a signal generating means which can be regarded as a principal element provided by the present invention, a screen display IC 9 implementing typically a character generator for generating a ten-step signal required for the white-balance (GAMMA) adjustment of the liquid-crystal projector is employed in conjunction with a D/A-conversion unit 10 connected to the screen display IC 9. It should be noted that a portion indicated by dashed lines is a control system such as an I2C BUS.

The signal generating means is shown in detail in Fig. 3A. As shown in the figure, the signal generating means comprises the screen display IC 9 and the four-bit D/A-conversion unit 10 which includes transistors Q1, Q2, Q3, Q4 and Q5 as well as resistors R1, R2, R3 and R4. The collectors of the transistors Q1, Q2, Q3 and Q4 are connected to output pins O-I, O-R, O-G and O-B of the screen display IC 9. On the other hand, the emitters of the transistors Q1, Q2, Q3 and Q4 are connected to the resistors R1, R2, R3 and R4 respectively. The resistance values of the resistors R1, R2, R3 and R4 can be varied to determine the characteristic of the D/A-conversion unit 10. The outputs of the resistors R1, R2, R3 and R4 are connected to an output terminal 11 through the buffer transistor Q5.

In the present embodiment, available bits of a tuner control IC are used for the output pins O-I, O-R, O-G and O-B of the screen display IC 9 and the resistors R1, R2, R3 and R4 employed in the D/A-conversion unit 10 are wired form a ladder configuration. In this way, it is possible to build a cheap signal generating means, the characteristic of which can be controlled by software with a high degree of freedom, without the need to provide a new control IC or a new D/A-converter. It should be noted that the image projecting apparatus and the signal generating means provided by the present invention are no more than a preferred typical embodiment. It is needless to say that an embodiment having another configuration but the providing yet equivalent functions can of course be implemented.

The operation of the image projecting apparatus provided by the present embodiment with the configuration described above is explained as follows.

In the image projecting apparatus shown in Fig. 2, a video signal supplied to the terminal 1 undergoes pieces of processes including amplification, demodulation and matrix processing in the video processor 2 before being supplied to the R, G and B interface 3. On the other hand, the attributes of the supplied video signal such as the picture, the hue and the colours are adjusted by controlling the video processor 2 using a control signal from typically the remote controller 5 which is supplied to the video processor 2 by way of the microcomputer 7.

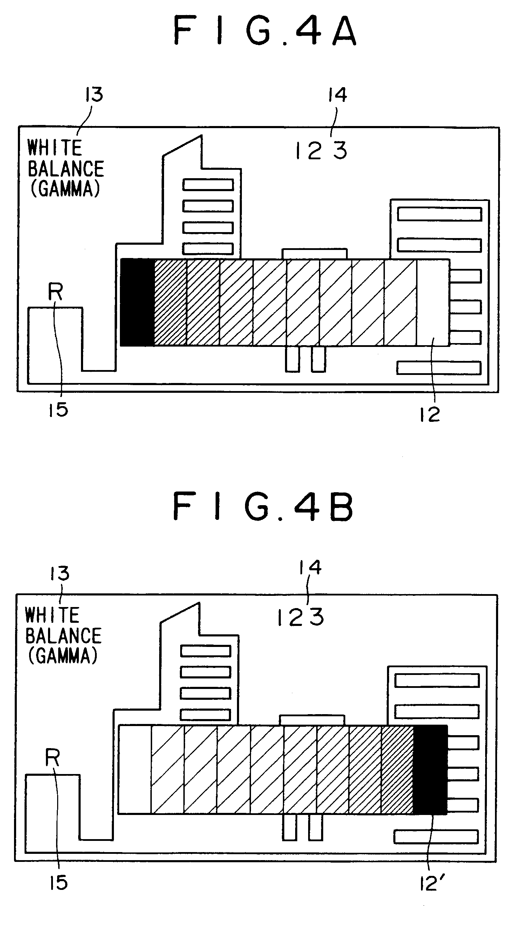

The screen display IC 9 shown in Fig. 3A is controlled by the microcomputer 7 so that 1 and 0 signals like ones shown in Fig. 3B are generated at the output pins O-I, O-R, O-G and O-B of the screen display IC 9. In the D/A-conversion unit 10, the 1 and 0 signals like ones shown in Fig. 3B generated at the output pins O-I, O-R, O-G and O-B are multiplied by weights of 1, 2, 4 and 8 generated by the ladder comprising the resistors R1, R2, R3 and R4 described above to produce a ten-step signal, a voltage signal having a waveform resembling a stair at the output terminal 11. The ten-step signal generated in this way is supplied to the R, G and B interface 3 by way of the output terminal 11. The ten-step signal is synthesized with a video signal by the R, G and B interface 3 to produce a step waveform composed of colours from the black, through the gray to the white on the screen as shown in Fig. 4A and 4B.

Next, the method of adjusting the image projecting apparatus provided by the present invention is explained by referring to Figs. 2 and 4. Fig. 4A and 4B are explanatory diagrams showing typical display screens used for explaining the method of adjustment provided by the present invention. To be more specific, Fig. 4A is a diagram showing how a ten-step signal is synthesized with a video signal and Fig. 4B is a diagram showing how an inverted ten-step signal is synthesized with a video signal.

Data displayed along a video signal on a display screen of the image projecting apparatus provided by the present invention is stored in a file which is used for storing data required in the work to adjust and inspect the image projecting apparatus and the service work thereof. The data is displayed when "Service Mode ON" is selected by the user by operating the keyboard 4 or the remote controller 5.

Details of the adjustment screens shown in Fig. 4A and 4B each include a white-balance (GAMMA) adjustment item 13, adjustment data 14 expressed by the absolute value of an adjustment number thereof, an abbreviated display 15 (such as R) of an adjusted panel in relation to the G liquid-crystal display panel serving as a reference and the ten-step signal 12, a characterizing feature of the present invention. It should be noted that these pieces of displayed data are generated by a monitor microcomputer, which is not shown in the figure, under the control of the microcomputer 7. The data is supplied to the screen display IC 9 to be displayed on a display screen. The microcomputer 7 also makes a decision as to whether or not the ten-step signal 12 is to be displayed and, if to be displayed, whether or not the step waveform thereof is to be inverted in accordance with an operation carried out on the keyboard 4 or the remote comptroller 5.

The service man adjusts the R and B liquid-crystal display panels while verifying the screens by using a driving colorimeter or by visual observation in relation to the G liquid-crystal display panel which has been adjusted as a reference on the basis of the data and the ten-step signal 12 shown in Figs. 4A and 4B.

As described above, the ten-step signal 12 can be inverted in to an inverted ten-step signal 12' shown in Fig. 4B. As a result, it is possible to carry out white-balance (GAMMA) adjustment with the uniformity of the left and righthand sides taken into consideration with a high degree of precision.

As described above, according to the method of adjusting the image projecting apparatus provided by the present invention, the ten-step signal 12 required in the white-balance (GAMMA) adjustment peculiar to the liquid-crystal display apparatus thereof is displayed along with a video signal. As a result, the user can carry out adjustment without spending time excessively with a higher degree of work efficiency.

In addition, in the signal generating means provided by the present invention, available bits of a tuner control IC are used and the D/A-conversion unit 10 includes resistors wired to form a ladder configuration. Thus, a signal generating means which can be implemented into a cheap configuration can be built without employing a new control IC and a new D/A converter.

On the top of that, the signal generating means for generating the ten-step signal is controlled by software embedded in a control IC, making it possible to change the ten-step signal with ease.

It should be kept in mind that the scope of the present invention is not limited to the embodiment described above. That is to say, a variety of embodiments can be built without deviating from the true spirit of the present invention. For example, a rear-type liquid-crystal projector has been explained as one implementation of the embodiment. It is needless to say, however, that applications of the present invention also include other kinds of equipment that require white-balance (GAMMA) adjustment such as a liquid-crystal monitor, a liquid-crystal television, a front-type liquid-crystal projector and a plasma address liquid-crystal display apparatus. In addition, the present invention is applied mainly to adjustment work during a service-working time as described above. It should be noted, however, that the scope of the present invention also includes adjustment in a manufacturing process as well. On the top of that, it is needless to say that a variety of embodiments of the present invention can be further developed without sticking to the embodiment described above.

## Claims

1. A method of adjusting an image projecting apparatus wherein lights passing through red, green and blue liquid-crystal display panels are projected on a display screen to form an image thereon, said method comprising:
an inputting step of inputting a control instruction and selecting a service mode;
a processing step of accepting and processing said input control instruction and said selected service mode;
a signal generating step of generating a test pattern to be used in said service mode; and
a displaying/outputting step of displaying said test pattern generated at said signal generating step by superposition of said test pattern on an image displayed on said display screen,
whereby adjustment of said liquid-crystal display panels is based on said test pattern appearing on said display screen.

2. A method of adjusting an image projecting apparatus according to claim 1, wherein in an adjustment mode selected in said service mode, white balance is adjusted by using a stair-like-step signal with a gradually varying density starting from 0 IRE used as said test pattern.

3. A method of adjusting an image projecting apparatus according to claim 2, wherein said white balance is adjusted by operations carried out at said inputting step.

4. An image projecting apparatus for projecting lights passing through red, green and blue liquid-crystal display panels on a display screen in order to form an image thereon, said apparatus comprising:
an inputting means for inputting a control instruction and selecting a service mode;
a processing means for accepting and processing said input instruction and said selected service mode;
a signal generating means for generating a test pattern to be used in said service mode; and
a displaying/outputting means for displaying said test pattern generated by said signal generating means by superposition of said test pattern on an image displayed on said display screen.

5. An image projecting apparatus according to claim 4 wherein, in an adjustment mode selected in said service mode, white balance is adjusted by using a stair-like-step signal with a gradually varying density starting from 0 IRE used as said test pattern.

6. An image projecting apparatus according to claim 4 or 5, wherein said test pattern can be inverted by operating said inputting means.

7. An image projecting apparatus according to claim 4, 5 or 6, wherein said signal generating means comprises available bits of a predetermined microcomputer employed in said image projecting apparatus, and a digital-to-analog conversion unit which has resistor connected to said available bits to form a ladder configuration.
